# EUROPÄISCHE PATENTSCHRIFT

(11) **EP 4 337 498 B1**
(45) Veröffentlichungstag und Bekanntmachung des Hinweises auf die Patenterteilung: **31.12.2025**
(21) Anmeldenummer: 22726406.6
(22) Anmeldetag: 27.04.2022
(51) Int. Cl.: B60S 1/48, B60S 1/50, B60Q 1/26

(54) **FLÜSSIGKEITSEINRICHTUNG EINES KRAFTWAGENS**
LIQUID DEVICE OF A MOTOR VEHICLE
DISPOSITIF DE LIQUIDE D'UN VÉHICULE À MOTEUR

(30) Priorität: 11.05.2021 DE 102021002499
(43) Veröffentlichungstag der Anmeldung: 20.03.2024
(73) Patentinhaber: Mercedes-Benz Group AG, 70372 Stuttgart (DE)
(72) Erfinder: PETERS, Steven, 71701 Schwieberdingen (DE)
(74) Vertreter: Novagraaf Group
(86) Internationale Anmeldenummer: PCT/EP2022/061276
(87) Internationale Veröffentlichungsnummer: WO 2022/238127

(56) Entgegenhaltungen:
- DE-A1- 10 250 440
- DE-U1- 202017 101 340
- GB-A- 2 485 424

## Beschreibung

Die Erfindung betrifft eine Flüssigkeitseinrichtung gemäß dem Oberbegriff von Patentanspruch 1. Ferner betrifft die Erfindung ein Verfahren zum Betreiben einer solchen Flüssigkeitseinrichtung gemäß dem Oberbegriff von Patentanspruch 10.

Aus der GB 2 485 424 A ist ein Verfahren zur Anpassung eines Fahrzeugs mit einer Scheibenwaschanlage offenbart, die ein Scheibenwaschbehälter für Scheibenwaschflüssigkeit umfasst, wobei der Behälter eine Füllvorrichtung hat, durch die die Scheibenwaschflüssigkeit aufgefüllt werden kann. Hierbei sind sowohl der Einlass als auch der Auslass für eine Flüssigkeit in einem vorderen Bereich des Kraftwagens angeordnet.

Aus der DE 10 2012 006 754 A1 ist ein System aus mehreren Einheiten bekannt, welche jeweils aus einem Wassertank, einer Wasserpumpe, Verbindungsschläuchen und einem Außenknopf beziehungsweise Außenrohr bestehen Die Außenknöpfe beziehungsweise Außenrohre sind auf der Karosserie so befestigt, dass durch den Druck der Wasserstrahlen, die Ausgangsdüsen nach außen schwenken. Das System kann sowohl aus einer Innenseite des Fahrzeuges als auch von außen und per Fernbedienung gestartet und gesteuert werden.

Schließlich sind noch aus der DE 20 2017 101 340 U1 und aus der DE 102 50 440 A1 weitere Scheibenwaschanlagen aus dem Stand der Technik bekannt.

Aufgabe der Erfindung ist es, eine Flüssigkeitseinrichtung und ein Verfahren zu schaffen, mittels welcher ein Flüssigkeitsstrahl zu einem korrespondierenden Flüssigkeitsbehältnis gefördert werden kann.

Diese Aufgabe wird erfindungsgemäß durch eine Flüssigkeitseinrichtung mit den Merkmalen des Patentanspruchs 1 sowie durch ein Verfahren mit den Merkmalen des Patentanspruchs 8 gelöst. Vorteilhafte Ausgestaltungen der erfindungsgemäßen Flüssigkeitseinrichtung sind als Vorteile und vorteilhafte Ausgestaltungen des erfindungsgemäßen Verfahren anzusehen und umgekehrt.

Die erfindungsgemäße Flüssigkeitseinrichtung zum Erzeugen eines Flüssigkeitsstrahls an einem Außenbereich eines Kraftwagens umfasst einen Flüssigkeitsauslass, über welchen der mittels einer Pumpeinrichtung erzeugte, von einem Tank gespeiste Flüssigkeitsstrahl im Außenbereich des Kraftwagens austritt.

Um dabei eine Flüssigkeitseinrichtung zu schaffen, mittels welcher der Flüssigkeitsstrahl zu einem korrespondierenden Flüssigkeitsbehältnis gefördert werden kann, ist es erfindungsgemäß vorgesehen, dass die Flüssigkeitseinrichtung ein Flüssigkeitsbehältnis mit einem Flüssigkeitseinlass umfasst, in welchem der aus dem Flüssigkeitsauslass austretende Flüssigkeitsstrahl im Außenbereich des Kraftwagens aufnehmbar ist. Weiterhin ist der Flüssigkeitseinlass über eine Leitung mit dem Tank verbunden. In anderen Worten wird eine Pumpe mit Flüssigkeit aus dem Tank gespeist und die Flüssigkeit mittels des Flüssigkeitsauslasses als Flüssigkeitsstrahl in eine Umgebung der Flüssigkeitseinrichtung befördert. Der Flüssigkeitsstrahl gelangt über eine Flugbahn zum Flüssigkeitsbehältnis und dessen Flüssigkeitseinlass. Aus dem Flüssigkeitsbehältnis wird die Flüssigkeit mittels der Leitung wiederum in den Tank geleitet, wodurch sich der Kreislauf der Flüssigkeit schließt.

Der Flüssigkeitsauslass ist hierbei in Fahrzeuglängsrichtung in einem vorderen Außenbereich des Kraftwagens und der Flüssigkeitseinlass in Fahrzeuglängsrichtung in einem hinteren Außenbereich angeordnet. Hierbei ist der Flüssigkeitsauslass dazu ausgebildet, den Flüssigkeitsstrahl in einem Winkel zwischen in Fahrzeuglängsrichtung nach hinten und in Fahrzeughochrichtung nach oben in den hinteren Außenbereich zu befördern, an welchem der Flüssigkeitseinlass und das Flüssigkeitsbehältnis angeordnet sind. In anderen Worten ist es mittels der Flüssigkeitseinrichtung möglich, einen Flüssigkeitsstrahl mit dessen Flugbahn derart aus dem Flüssigkeitsauslass ausströmen zu lassen, dass der Flüssigkeitsstrahl in dem Flüssigkeitsbehältnis mündet. Hierbei ist der Flüssigkeitseinlass beispielsweise wenigstens teilweise konisch gebildet, sodass eine Toleranz für einen Ausgleich unterschiedlicher, beispielsweise windbedingt unterschiedlicher Flugbahnen ermöglicht ist.

Die Pumpeinrichtung ist zudem dazu ausgebildet, bei Eintritt des Flüssigkeitsstrahls in das Flüssigkeitsbehältnis die Flüssigkeit über die Leitung in den Tank zu befördern, wodurch eine im Verhältnis zum Volumen des Flüssigkeitsbehältnisses geringe Menge an Flüssigkeit aufgenommen ist und der Rest in den Kreislauf eingespeist wird. Dies führt dazu, dass der Tank mit Flüssigkeit aufgefüllt wird, um den Flüssigkeitsstrahl weiterhin auszulassen. Zudem ist es insbesondere möglich, nicht nur einen Flüssigkeitsstrahl mittels der Pumpeinrichtung auszulassen, sondern auch eine Vielzahl davon, welche sequentiell ausgelassen werden. In anderen Worten ist hiermit eine Integration einer Flüssigkeitseinrichtung beziehungsweise eines Wasserspeichers, der mittels der Pumpeinrichtung kurze Flüssigkeitsstrahlen beziehungsweise Sequenzen eines Wasserstrahls beziehungsweise Wasserstreifen von einer Front des Kraftwagens beziehungweise Fahrzeugs in Richtung Heck wirft, möglich. Das Wasser wird dort aufgefangen und wieder zurückgeführt, so dass eine geringe Menge mitgeführter Flüssigkeit beziehungsweise Wasser in einem kleinen Tank ausreicht, um ein optisches Wasserspiel im Außenbereich des Kraftwagens entstehen zu lassen.

Schließlich ist es vorgesehen, dass der Flüssigkeitsauslass in einem vorderen Außenbereich des Kraftwagens und der Flüssigkeitseinlass in einem hinteren Außenbereich des Kraftwagens angeordnet ist. Der vordere Außenbereich ist insbesondere durch eine Fronthaube des Kraftwagens bereitgestellt. Insbesondere ist hierbei der Flüssigkeitsauslass an einem in Fahrzeuglängsrichtung vorderen mittleren Bereich der Fronthaube angeordnet. Hierbei ist es möglich, den Flüssigkeitsauslass unterhalb eines Abdeckelements, insbesondere unterhalb eines Emblems des Kraftwagens, anzuordnen, wobei bei Anwendung der Flüssigkeitseinrichtung das Abdeckelement mittels eines weiteren Aktuators der Flüssigkeitseinrichtung das Emblem aufklappbar oder ausfahrbar und der Flüssigkeitsauslass ausfahrbar gestaltet sein kann.

Der Flüssigkeitseinlass ist insbesondere an einem in Fahrzeuglängsrichtung hinteren mittleren Bereich des Hecks angeordnet. Hierbei ist es möglich, den Flüssigkeitseinlass unterhalb eines zweiten Abdeckelements, insbesondere unter einer Antenne des Kraftwagens, anzuordnen, wobei bei Anwendung der Flüssigkeitseinrichtung das Abdeckelement mittels des Aktuators der Flüssigkeitseinrichtung aufklappbar und der Flüssigkeitseinlass ausfahrbar ist.

Eine vorteilhafte Ausgestaltung der Erfindung sieht vor, dass der Flüssigkeitsstrahl in einer Flugbahn vom Flüssigkeitsauslass zum Flüssigkeitsbehältnis leitbar ist. Dabei ist es beispielsweise möglich, das Flüssigkeitsbehältnis so zu gestalten, dass es wenigstens teilweise in Fahrzeuglängsrichtung nach vorne gekippt befestigt ist, insbesondere in einem Einfallswinkel der Flugbahn des Flüssigkeitsstrahls in den Flüssigkeitseinlass. Eine einstellbare Ausgestaltung des Flüssigkeitsbehältnisses ermöglicht hierbei mehrere Winkel, wodurch beispielweise mittels einer Steuerungseinrichtung und eines Aktuators dieser Winkel einstellbar ist. Ebenso kann eine korrespondierende Steuerung des Flüssigkeitsauslasses den Austrittswinkel des Flüssigkeitsstrahls anpassen. Somit ist die Flugbahn des Flüssigkeitsstrahls wenigstens teilweise steuerbar.

Weiterhin vorteilhaft hat sich eine Ausgestaltung der Erfindung erwiesen, bei welcher die Flüssigkeitseinrichtung eine Lichtquelle, insbesondere ein Laserstrahl, umfasst, mittels welcher der Flüssigkeitsstrahl beleuchtbar ist. Hierbei ist die Lichtquelle beispielsweise an einer Position angeordnet, von welcher die Lichtquelle den Flüssigkeitsstrahl beispielsweise farbig beleuchtet beziehungsweise anstrahlt und wodurch zusätzlich zum Wasserspiel ein Lichtspiel erzeugt wird.

Eine weitere vorteilhafte Ausgestaltung der Erfindung sieht vor, dass mittels wenigstens einer mit dem Tank verbundenen weiteren Leitung eine Flüssigkeitsmenge aus wenigstens einer weiteren Komponente des Kraftwagens in den Tank einspeisbar ist. Hierbei ist die weitere Komponente beispielsweise als eine Klimaanlage des Kraftwagens bereitgestellt, in welcher Flüssigkeit entsteht und aus dieser entnehmbar ist. Das Einspeisen kann beispielweise mittels der weiteren Leitung und mittels der Pumpeinrichtung und korrespondieren Ventilen gesteuert werden.

Zudem ist es in einer weiteren vorteilhaften Ausgestaltung der Erfindung vorgesehen, dass die Flüssigkeitseinrichtung mittels einer wenigstens teilweise automatisierten Schaltereinheit steuerbar ist. Die Schaltereinheit ist insbesondere bei einem Parken des Kraftwagens manuell und/oder wenigstens teilautomatisiert betätigbar, wodurch die Flüssigkeitseinrichtung für optische Effekte einschaltbar ist. Insbesondere ist diese mit einer elektrischen Recheneinrichtung und/oder eines Fahrerassistenzsystems des Kraftwagens elektronisch koppelbar, wodurch auch eine Fernsteuerung über beispielsweise einem ID-Geber beziehungsweise einen ferngesteuerten Schlüssel möglich ist. Weiterhin kann die Flüssigkeitseinrichtung auch mittels eines Mobiltelefons und korrespondierenden Applikationen, welche mit dem Kraftwagen kabellos koppelbar sind, gesteuert werden. Ebenso ist das Einstellen des Flüssigkeitsstrahls und der Lichtquelle mittels Fernsteuerung möglich.

Weiterhin vorteilhaft hat sich eine Ausgestaltung der Erfindung erwiesen, bei welcher wenigstens ein weiterer, zweiter Flüssigkeitsauslass mit einer korrespondierenden zweiten Pumpeinrichtung und wenigstens ein weiteres zweites Flüssigkeitsbehältnis mit zweitem Flüssigkeitseinlass angeordnet sind. Hierbei ist wenigstens ein zweiter Flüssigkeitsstrahl analog zum Flüssigkeitsstrahl leitbar. In anderen Worten ist somit wenigstens ein zweiter Flüssigkeitsstrahl erzeugbar, insbesondere eine Vielzahl davon, durch welche das Wasserspiel weiter ausgebaut ist. Insbesondere sind alle Flüssigkeitsauslasse und Flüssigkeitseinlasse mit demselben Tank verbunden, wodurch ein Kreislauf bestehen bleibt.

Zudem hat sich eine weitere Ausgestaltung der Erfindung als vorteilhaft erwiesen, bei welcher mehrere Flüssigkeitsstrahlen in einem Flüssigkeitsbehältnis aufnehmbar sind. Dies bedeutet, dass unabhängig von der Vielzahl an Flüssigkeitsstrahlen das eine Flüssigkeitsbehältnis dazu ausgebildet ist, alle Flüssigkeitsstrahlen aufzunehmen. Hierfür ist beispielsweise eine Winkeländerung des Flüssigkeitsbehältnisses in allen Freiheitsgraden mittels einer dafür vorgesehenen Bewegungseinrichtung denkbar.

Eine weitere vorteilhafte Ausgestaltung der Erfindung sieht vor, dass mehrere Flüssigkeitsstrahlen unabhängig voneinander steuerbar sind. Somit ist es möglich, verschiedene Flüssigkeitsstrahlen so zu gestalten, dass verschiedene Formen und zeitlich abgestimmte Effekte möglich sind. In Verbindung mit der Lichtquelle ist eine optimierte Ausgestaltung des Wasserspiels und der Lichteffekt möglich. Die Lichteffekte können beispielsweise mit einem Lautsprecher und einer zugehörigen Akustik erweitert werden. Somit ist es möglich beispielweise Wassergeräusche zusätzlich zum Wasserspiel hinzuzufügen, ebenso sin beispielweise passende Musik oder weitere Klänge einstellbar. Schließlich kann die Vielzahl von Flüssigkeitsstrahlen mittels einer Sensoreinrichtung gesteuert werden, wodurch diese wenigstens teilautomatisch ein- und ausschaltbar sind. Bei einer Annäherung, beispielweise eines Passanten an den Kraftwagen, kann mittels der Sensoreinrichtung die Flüssigkeitseinrichtung eingeschaltet werden. Nachdem der Passant weitergegangen ist, schaltet sich die Flüssigkeitseinrichtung automatisch wieder ab, wodurch eine Energieeinsparung möglich ist. Dies ist ebenfalls mittels eines Timers für die Flüssigkeitseinrichtung möglich. Der Timer betätigt die Flüssigkeitseinrichtung nach einer vorgegebenen Zeit, wodurch ebenfalls eine Energieeinsparung ermöglicht wird. Zudem ist bei einer Vielzahl von Flüssigkeitseinrichtungen möglich, mittels eines jeweiligen Timers, das Wasserspiel auszubauen und zu optimieren.

Ein weiterer Aspekt der Erfindung betrifft ein Verfahren zum Betreiben einer Flüssigkeitseinrichtung zum Erzeugen eines Flüssigkeitsstrahls an einem Außenbereich eines Kraftwagens, bei welchem ein über einen Flüssigkeitsauslass austretender, mittels einer Pumpeinrichtung erzeugter, von einem Tank gespeister Flüssigkeitsstrahl im Außenbereich des Kraftwagens vorgesehen wird. Das Verfahren ist dadurch gekennzeichnet, dass der aus dem Flüssigkeitsauslass austretende Flüssigkeitsstrahl mittels eines einen Flüssigkeitseinlass umfassenden Flüssigkeitsbehältnisses, welches im Außenbereich des Kraftwagens angeordnet und über eine Leitung mit dem Tank verbunden ist, aufgenommen wird.

Zusammenfassend beschreibt die Erfindung einen Wasserspeier beziehungsweise ein Wasserspiel mit einer Wasserversorgung in einem Außenbereich des Kraftwagens. Eine Ausströmungsstärke und eine Ausströmungsrichtung sind hierbei zwei benötigte Parameter um die Flugbahn der Flüssigkeitsstrahl zu steuern, wobei mittels der Pumpeinrichtung und den Aktuatoren der Flüssigkeitsstrahl bewirkt wird.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in der einzigen Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

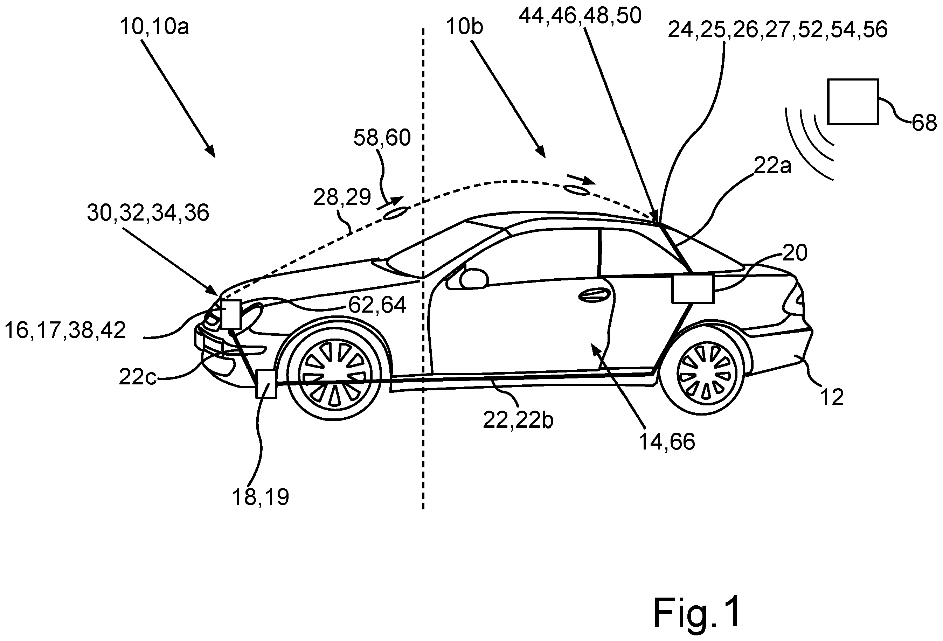

Dabei zeigt die einzige Fig. 1 eine Perspektivansicht eines Kraftwagens mit einer erfindungsgemäßen Flüssigkeitseinrichtung im Betrieb.

In der einzigen Fig. 1 sind gleiche oder funktionsgleiche Elemente mit den gleichen Bezugszeichen versehen.

Die einzige Fig. 1 zeigt eine Perspektivansicht eines Außenbereichs 10 eines Kraftwagens 12, insbesondere eines vorderen Außenbereichs 10a und eines hinteren Außenbereichs 10b, mit einer Flüssigkeitseinrichtung 14 im Betrieb. Hierbei weist die Flüssigkeitseinrichtung 14 einen Flüssigkeitsauslass 16, eine Pumpeinrichtung 18 und einen Tank 20 auf, zudem drei Leitungsbereiche 22a, 22b, 22c einer Leitung 22, welche ein Flüssigkeitsbehältnis 24 mit dem Tank 20 verbindet, wobei das Flüssigkeitsbehältnis 24 einen Flüssigkeitseinlass 26 aufweist. In anderen Worten ist die Flüssigkeitseinrichtung 14 zum Auslassen eines Flüssigkeitsstrahls 28 ausgebildet, wobei über einen Flüssigkeitsauslass 16 der mittels der Pumpeinrichtung 18 erzeugte, von dem Tank 20 gespeiste Flüssigkeitsstrahl 28 zum Flüssigkeitsbehältnis 24 über eine Flugbahn gelangt. Über den Flüssigkeitseinlass 26 ist der Flüssigkeitsstrahl 28 in das Flüssigkeitsbehältnis 24 aufnehmbar, wobei das Flüssigkeitsbehältnis 24 mittels des ersten Leitungsbereichs 22a mit dem Tank 20 verbunden ist. Der Tank 20 ist mit dem zweiten Leitungsbereich 22b mit der Pumpeinrichtung 18 verbunden und über den dritten Leitungsbereich 22c mit dem Flüssigkeitsauslass 16, sodass bei einer Anwendung der Flüssigkeitseinrichtung 14 ein Kreislauf geschlossen ist.

Der vordere Außenbereich 10a ist durch eine Abdeckhaube 30 des Kraftwagens 12 bereitgestellt. Hierbei ist der Flüssigkeitsauslass 16 an einem in Fahrzeuglängsrichtung x vorderen Bereich 32 der Abdeckhaube 30, insbesondere in einem in Fahrzeugquerrichtung y mittleren Bereich 34 des vorderen Bereichs 32 angeordnet. Hierbei ist der Flüssigkeitsauslass 16 unterhalb eines ersten Abdeckelements 36, insbesondere unterhalb eines Emblems des Kraftwagens 12 angeordnet, wobei bei Anwendung der Flüssigkeitseinrichtung 14 das Abdeckelement 36 mittels eines ersten Aktuators 38 der Flüssigkeitseinrichtung 14 aufklappbar oder ausfahrbar und der Flüssigkeitsauslass 16 durch ein Hochfahren in Fahrzeughochrichtung z mittels eines zweiten Aktuators 40 der Flüssigkeitseinrichtung 14 freigestellt ist.

Der hintere Außenbereich 10b ist durch ein Heck 44 des Kraftwagens 12 bereitgestellt. Hierbei der Flüssigkeitseinlass 26 an einem in Fahrzeuglängsrichtung x hinteren Bereich 46 des Hecks 44, insbesondere in einem in Fahrzeugquerrichtung y mittleren Bereichs 48 des hinteren Bereichs 46 angeordnet. Hierbei ist der Flüssigkeitseinlass 26 unterhalb eines zweiten Abdeckelements 50, insbesondere unter einer Antenne des Kraftwagens 12 angeordnet, wobei bei Anwendung der Flüssigkeitseinrichtung 14 das zweite Abdeckelement 50 mittels eines dritten Aktuators 52 der Flüssigkeitseinrichtung 14 aufklappbar und der Flüssigkeitseinlass 26 durch ein in Fahrzeughochrichtung z Hochfahren mittels eines vierten Aktuators 54 der Flüssigkeitseinrichtung 14 frei gestellt ist, wobei ein Kippen des Flüssigkeitsbehältnisses 24 mittels eines fünften Aktuators 56 der Flüssigkeitseinrichtung 14 ermöglicht ist. Mittels der Pumpeinrichtung 18 ist es möglich, einen Flüssigkeitsstrahl 28 in Bezug auf eine Ausströmungsrichtung 58 und/oder Ausströmungsstärke 60 zu steuern. Somit ist der Flüssigkeitsstrahl 28 erzeugbar. Weiterhin ist an der Flüssigkeitseinrichtung 14 eine Lichtquelle 62, insbesondere ein Laserstrahl, angeordnet, welche den Flüssigkeitsstrahl 28 beispielsweise farbig beleuchtet. Hierbei ist die Lichtquelle 62 beispielsweise an einer Position 64 angeordnet, von welcher die Lichtquelle 62 den Flüssigkeitsstrahl 28 beleuchtet und wodurch zusätzlich zu einem daraus entstehenden Wasserspiel, aus den optischen Effekten ein Lichtspiel erzeugt wird. Die Lichtquelle 62 kann auch an einer anderen Position des Kraftwagens 12 angeordnet sein, beispielsweise im Bereich dessen Hecks.

Zudem ist mittels wenigstens einer mit dem Tank 20 verbundenen und in der einzigen Fig. 1 nicht sichtbaren weiteren zweiten Leitung eine Flüssigkeitsmenge aus wenigstens einer weiteren Komponente des Kraftwagens 12 in den Tank 20 einspeisbar. Hierbei ist die in der einzigen Fig. 1 ebenfalls nicht sichtbare weitere Komponente beispielsweise als eine Klimaanlage des Kraftwagens 12 bereitgestellt, aus welcher Flüssigkeit entnehmbar ist. Das Einspeisen ist hierbei mittels der weiteren zweiten Leitung und mittels der Pumpeinrichtung 18 und korrespondierenden Ventilen steuerbar.

Schließlich ist der Flüssigkeitseinrichtung 14 eine wenigstens teilweise automatisierte Schaltereinheit 66 zugeordnet. Die Schaltereinheit 66 ist insbesondere bei einem Parken des Kraftwagens 12 manuell und/oder wenigstens teilautomatisiert betätigbar, wodurch die Flüssigkeitseinrichtung 14 für optische Effekte einschaltbar ist. Insbesondere ist diese mit einer elektrischen Recheneinrichtung und/oder einem Fahrerassistenzsystem des Kraftwagens 12 elektronisch koppelbar, wodurch auch über eine Fernsteuerung 68, beispielsweise einen ID-Geber beziehungsweise einen ferngesteuerten Schlüssel, die Flüssigkeitseinrichtung 14 einschaltbar ist. Weiterhin kann diese mittels Mobiltelefonen und Applikationen, welche mit dem Kraftwagen 12 kabellos koppelbar sind, einschaltbar sind. Ebenso ist das Einstellen des Flüssigkeitsstrahls 28 und der Lichtquelle 62 mittels der Fernsteuerung 68 möglich.

## Patentansprüche

1. Flüssigkeitseinrichtung (14) zum Erzeugen eines Flüssigkeitsstrahls (28) an einem Außenbereich (10) eines Kraftwagens (12), mit einem in einem vorderen Außenbereich (10a) des Kraftwagens (12) angeordneten Flüssigkeitsauslass (16), über welchen der mittels einer Pumpeinrichtung (18) erzeugte, von einem Tank (20) gespeiste Flüssigkeitsstrahl (28) im Außenbereich (10) des Kraftwagens (12) austritt, wobei die Flüssigkeitseinrichtung (14) ein Flüssigkeitsbehältnis (24) mit einem Flüssigkeitseinlass (26) umfasst, in welchem der aus dem Flüssigkeitsauslass (16) austretende Flüssigkeitsstrahl (28) im Außenbereich (10) des Kraftwagens aufnehmbar ist und welches über eine Leitung (22) mit dem Tank (20) verbunden ist, wobei der Flüssigkeitsstrahl (28) in einer Flugbahn vom Flüssigkeitsauslass (16) zum Flüssigkeitsbehältnis (24) leitbar ist,
**dadurch gekennzeichnet, dass**
der Flüssigkeitseinlass (26) in einem hinteren Außenbereich (10b) des Kraftwagens angeordnet ist.

2. Flüssigkeitseinrichtung (14) nach einem der vorhergehenden Ansprüche,
**dadurch gekennzeichnet, dass**
die Flüssigkeitseinrichtung (14) eine Lichtquelle (62) umfasst, mittels welcher der Flüssigkeitsstrahl (28) beleuchtbar ist.

3. Flüssigkeitseinrichtung (14) nach einem der vorhergehenden Ansprüche,
**dadurch gekennzeichnet, dass**
mittels wenigstens einer mit dem Tank (20) verbundenen weiteren Leitung eine Flüssigkeitsmenge aus wenigstens einer weiteren Komponente des Kraftwagens (12) in den Tank (20) einspeisbar ist.

4. Flüssigkeitseinrichtung (14) nach einem der vorherigen Ansprüchen,
**dadurch gekennzeichnet, dass**
die Flüssigkeitseinrichtung (14) mittels einer wenigstens teilweise automatisierten Schaltereinheit (66) steuerbar ist.

5. Flüssigkeitseinrichtung (14) nach einem der vorherigen Ansprüchen,
**dadurch gekennzeichnet, dass**
wenigstens ein weiterer zweiter Flüssigkeitsauslass (17) mit einer korrespondierenden zweiten Pumpeinrichtung (19), und wenigstens ein weiteres zweites Flüssigkeitsbehältnis (25) mit einem zweiten Flüssigkeitseinlass (27) angeordnet sind, wobei wenigstens ein zweiter Flüssigkeitsstrahl (29) analog zum Flüssigkeitsstrahl (28) leitbar ist.

6. Flüssigkeitseinrichtung (14) nach einem der vorherigen Ansprüchen,
**dadurch gekennzeichnet, dass**
eine Vielzahl von Flüssigkeitsstrahlen (28, 29) in einem Flüssigkeitsbehältnis (24) aufnehmbar sind.

7. Flüssigkeitseinrichtung (14) nach Anspruch 6,
**dadurch gekennzeichnet, dass**
die Vielzahl von Flüssigkeitsstrahlen (28, 29) unabhängig voneinander steuerbar sind.

8. Verfahren zum Betreiben einer Flüssigkeitseinrichtung (14) zum Erzeugen eines Flüssigkeitsstrahls (28) an einem Außenbereich (10) eines Kraftwagens (12), bei welchem ein über einen Flüssigkeitsauslass (16) austretender, mittels einer Pumpeinrichtung (18) erzeugter, von einem Tank (20) gespeister Flüssigkeitsstrahl (28) im Außenbereich (10) des Kraftwagens (12) vorgesehen wird, wobei der aus dem Flüssigkeitsauslass (16) austretende Flüssigkeitsstrahl (28) mittels eines einen Flüssigkeitseinlass (26) umfassenden Flüssigkeitsbehältnisses (24), welches im Außenbereich (10) des Kraftwagens angeordnet und über eine Leitung (22) mit dem Tank (20) verbunden ist, aufgenommen wird, wobei der Flüssigkeitsstrahl (28) in einer Flugbahn vom Flüssigkeitsauslass (16) zum Flüssigkeitsbehältnis (24) leitbar ist,
**dadurch gekennzeichnet, dass**
der Flüssigkeitsstrahl (28) über den in einem hinteren Außenbereich (10b) des Kraftwagens angeordneten Flüssigkeitseinlass (26) aufgenommen wird.

## Claims

1. Liquid device (14) for generating a liquid jet (28) on an outer region (10) of a motor vehicle (12), comprising a liquid outlet (16) which is arranged in a front outer region (10a) of the motor vehicle (12) and via which the liquid jet (28), which is generated by means of a pump device (18) and is fed from a tank (20), exits in the outer region (10) of the motor vehicle (12), the liquid device (14) comprising a liquid container (24) having a liquid inlet (26) in which the liquid jet (28) exiting from the liquid outlet (16) can be received in the outer region (10) of the motor vehicle and which is connected via a conduit (22) to the tank (20), the liquid jet (28) being able to be guided in a trajectory from the liquid outlet (16) to the liquid container (24),
**characterized in that**
the liquid inlet (26) is arranged in a rear outer region (10b) of the motor vehicle.

2. Liquid device (14) according to any of the preceding claims,
**characterized in that**
the liquid device (14) comprises a light source (62) by means of which the liquid jet (28) can be illuminated.

3. Liquid device (14) according to any of the preceding claims,
**characterized in that,**
by means of at least one further conduit connected to the tank (20), an amount of liquid from at least one further component of the motor vehicle (12) can be fed into the tank (20).

4. Liquid device (14) according to any of the preceding claims,
**characterized in that**
the liquid device (14) can be controlled by means of an at least partially automated switch unit (66).

5. Liquid device (14) according to any of the preceding claims,
**characterized in that**
at least one further second liquid outlet (17) is arranged with a corresponding second pump device (19), and at least one further second liquid container (25) is arranged with a second liquid inlet (27), wherein at least one second liquid jet (29) can be guided in a manner analogous to the liquid jet (28).

6. Liquid device (14) according to any of the preceding claims,
**characterized in that**
a plurality of liquid jets (28, 29) can be received in a liquid container (24).

7. Liquid device (14) according to claim 6,
**characterized in that**
the plurality of liquid jets (28, 29) can be controlled independently of one another.

8. Method for operating a liquid device (14) for generating a liquid jet (28) on an outer region (10) of a motor vehicle (12), in which a liquid jet (28), which exits via a liquid outlet (16), is generated by a pump device (18) and is fed by a tank (20), is provided in the outer region (10) of the motor vehicle (12), wherein the liquid jet (28) exiting from the liquid outlet (16) is received by means of a liquid container (24) comprising a liquid inlet (26), which container is arranged in the outer region (10) of the motor vehicle and is connected to the tank (20) via a conduit (22), wherein the liquid jet (28) can be guided in a trajectory from the liquid outlet (16) to the liquid container (24),
**characterized in that**
the liquid jet (28) is received via the liquid inlet (26) arranged in a rear outer region (10b) of the motor vehicle.

## Revendications

1. Dispositif à liquide (14) permettant de générer un jet de liquide (28) sur une zone extérieure (10) d'un véhicule automobile (12), comportant une sortie de liquide (16) agencée dans une zone extérieure avant (10a) du véhicule automobile (12), par l'intermédiaire de laquelle le jet de liquide (28) généré par le biais d'un dispositif de pompage (18) et alimenté par un réservoir (20) sort dans la zone extérieure (10) du véhicule automobile (12), dans lequel le dispositif à liquide (14) comprend un récipient de liquide (24) comportant une entrée de liquide (26), dans lequel le jet de liquide (28) sortant de la sortie de liquide (16) peut être reçu dans la zone extérieure (10) du véhicule automobile et qui est relié par l'intermédiaire d'une conduite (22) au réservoir (20), dans lequel le jet de liquide (28) peut être dirigé selon une trajectoire de la sortie de liquide (16) au récipient de liquide (24),
**caractérisé en ce que**
l'entrée de liquide (26) est agencée dans une zone extérieure arrière (10b) du véhicule automobile.

2. Dispositif à liquide (14) selon l'une des revendications précédentes,
**caractérisé en ce que**
le dispositif à liquide (14) comprend une source de lumière (62) par le biais de laquelle le jet de liquide (28) peut être éclairé.

3. Dispositif à liquide (14) selon l'une des revendications précédentes,
**caractérisé en ce que**
par le biais d'au moins une autre conduite reliée au réservoir (20), une quantité de liquide provenant d'au moins un autre composant du véhicule automobile (12) peut être injectée dans le réservoir (20).

4. Dispositif à liquide (14) selon l'une des revendications précédentes,
**caractérisé en ce que**
le dispositif à liquide (14) peut être commandé par le biais d'une unité de commutation (66) au moins partiellement automatisée.

5. Dispositif à liquide (14) selon l'une des revendications précédentes,
**caractérisé en ce que**
au moins une autre seconde sortie de liquide (17) comportant un second dispositif de pompage (19) correspondant, et au moins un autre second récipient de liquide (25) comportant une seconde entrée de liquide (27) sont agencés, dans lequel au moins un second jet de liquide (29) peut être dirigé de manière analogue au jet de liquide (28).

6. Dispositif à liquide (14) selon l'une des revendications précédentes,
**caractérisé en ce que**
une pluralité de jets de liquide (28, 29) peut être reçue dans un récipient de liquide (24).

7. Dispositif à liquide (14) selon la revendication 6,
**caractérisé en ce que**
la pluralité de jets de liquide (28, 29) peut être commandée indépendamment les uns des autres.

8. Procédé d'exploitation d'un dispositif à liquide (14) permettant de produire un jet de liquide (28) sur une zone extérieure (10) d'un véhicule automobile (12), dans lequel un jet de liquide (28) sortant par une sortie de liquide (16), produit par le biais d'un dispositif de pompage (18) et alimenté par un réservoir (20), est prévu dans la zone extérieure (10) du véhicule automobile (12), dans lequel le jet de liquide (28) sortant de la sortie de liquide (16) est reçu par le biais d'un récipient de liquide (24) comprenant une entrée de liquide (26), lequel récipient est agencé dans la zone extérieure (10) du véhicule automobile et est relié au réservoir (20) par l'intermédiaire d'une conduite (22), dans lequel le jet de liquide (28) peut être dirigé selon une trajectoire de la sortie de liquide (16) au récipient de liquide (24),
**caractérisé en ce que**
le jet de liquide (28) est reçu par l'intermédiaire de l'entrée de liquide (26) agencée dans une zone extérieure arrière (10b) du véhicule automobile.
